# EUROPEAN PATENT SPECIFICATION

(11) **EP 2 719 312 B1**
(45) Date of publication and mention of the grant of the patent: **10.06.2015**
(21) Application number: 12188327.6
(22) Date of filing: 12.10.2012
(51) Int. Cl.: A47J 37/12, B01D 39/20

(54) **Improved filter group for deep fat fryer**
Verbesserte Filtergruppe für eine Fritteuse
Groupe de filtre amélioré pour friteuse

(43) Date of publication of application: 16.04.2014
(73) Proprietor: ELECTROLUX PROFESSIONAL S.p.A., 33170 Pordenone (IT)
(72) Inventor: Tassan Mangina, Franco, I-33170 Pordenone (IT); Fadelli, Marino, I-33170 Pordenone (IT); Scacco, Maurizio, I-33170 Pordenone (IT)
(74) Representative: Maccalli, Marco

(56) References cited:
- US-A1- 2007 289 927
- US-B1- 6 371 307

## Description

### Field of the invention

The present invention generally relates to kitchen appliances for deep fat frying of food, also known as deep fat fryers or deep fryers. More particularly, the present invention relates to an improved filter group for use in such deep fryers.

### Background of the invention

Modem deep fryers are commonly used in professional kitchens (*e.g.*, in fast food restaurants) for performing deep fat frying of food - *i.e.,* a cooking method wherein food is submerged in relatively large quantities of edible cooking oils at high temperature (*e.g.*, 180 C or higher).

A conventional deep fryer generally comprises a fry pot for containing cooking oil, as well as a - *e.g.*, wire - basket for containing food. In operation, the basket is manually (or automatically) lowered into the fry pot (down to full submersion of food to be cooked into the cooking oil) and raised from it when cooking is finished (thereby allowing cooked food to be raised clear of the cooking oil).

As known, during the deep frying operations organic materials (*e.g.*, food particles and other solid wastes) accumulate in the cooking oil, thus impairing life of the cooking oil and quality of the food cooked therein. In fact, overheated organic materials typically cause hydrolysis, oxidation, and polymerization processes that accelerate smoking and foaming of the cooking oil and decrease heat transfer efficiency thereof (thus involving uneven or almost no browning of the food).

For such reasons, the cooking oil should be kept free from organic materials. In order to achieve that, several different types of deep fryers exist in the prior art, all of them being substantially based on the common approach of draining the cooking oil (from the fry pot) into a pan, filtering it by means of a filter group arranged within the pan, and feeding the filtered cooking oil back to the fry pot for further cooking.

According to a widely practiced implementation, the filter group comprises a spacer grid, and a porous-material paper envelope containing it - hereinafter filter envelope. In such implementation, the filter envelope has front and back walls joined (*e.g.*, sewed) at three of the four perimeter edges thereof, and is configured for fitting the spacer grid within it through the open end defined by the respective unsewed edges. Thus, upon said fitting, the spacer grid supports the filter envelope from inside (thereby keeping it uncollapsed). In this way, the interstices of the spacer grid identify, within the filter envelope, a free space (hereinafter, pocket) where filtered cooking oil (filtered as passing through the front and back walls of the filter envelope) is collected.

An extraction pipe, connected to the spacer grid through (a hole of the front or back wall of) the filter envelope, is provided for allowing extraction of filtered cooking oil from said pocket, whereas a sealing member is provided for sealing the open end, thus preventing unfiltered cooking oil within the pan from passing through it.

Broadly speaking, the fry pot is connected to the extraction pipe (and hence to the pocket) by means of a driven motor pump assembly. When the pump assembly is activated, the filtered cooking oil is extracted from the pocket and fed back to the fry pot for further cooking.

A filter group which is similar to the invention is known from US 6371 307 B1.

### Summary of the Invention

The Applicant has found that the known and practiced deep fryers based on the above-described filter group are not fully satisfactory, especially due installation difficulties.

In fact, in order to ensure proper filtering of the cooking oil, maintenance (*e.g.*, replacement) of the filter envelope should be carried out periodically by the user (or by the maintenance man).

However, extraction pipe disconnection from the spacer grid, extraction of the filter group from the deep fryer, and unsealing of the filter envelope open end operations are preliminarily required before carrying out filter envelope replacement, and opposite operations are backwardly required after it. Such operations, apart from involving time wasting, are unpractical, as the user has to handle a number of separated components (*e.g.*, pipe, connectors, gaskets, as wells as the sealing member itself), thus making filter envelope replacement susceptible to many mistakes - for example, accidental loss or discard of some components, especially the smallest ones.

The Applicant has faced the problem of devising a satisfactory solution able to overcome the above-discussed drawbacks.

In particular, one or more aspects of the solution according to specific embodiments of the invention are set out in the independent claims, with advantageous features of the same solution that are indicated in the dependent claims (with any advantageous feature provided with reference to a specific aspect of the solution according to an embodiment of the invention that applies *mutatis mutandis* to any other aspect thereof).

An aspect of the solution according to one or more embodiments of the present invention relates to a filter group for use in a deep fat fryer. The filter group comprises a porous material filter envelope for filtering cooking oil passing therethrough, and a spacer grid adapted to be longitudinally fitted into the filter envelope for supporting it from inside, the filter envelope comprising an open end for allowing fitting/unfitting of the spacer grid. The filter group further comprises an extraction pipe for allowing extraction of filtered cooking oil from inside the filter envelope, said extraction pipe passing through a hole of the filter envelope and being transversally connected to the spacer grid. In the solution according to one or more embodiments of the present invention, the extraction pipe is transversally connected to a peripheral portion of the spacer grid. The filter envelope comprises a longitudinal slit extending between said open end and said hole for allowing the transversally-connected extraction pipe to be longitudinally guided therethrough while the spacer grid is being fitted into/unfitted from the filter envelope, whereby said fitting/unfitting of the spacer grid is allowed without disconnection of it from the extraction pipe.

Preferably, although not necessarily, the extraction pipe is transversally connected to the spacer grid by welding.

According to an embodiment of the present invention, the extraction pipe comprises an enlarged flange adapted to be connected to the peripheral portion of the spacer grid.

Advantageously, the filter group further comprises a sealing member for sealing said open end of the filter envelope. For example, the sealing member is coupled with the extraction pipe such as to be movable with respect to it.

According to an embodiment of the present invention, the filter envelope has a length greater than the length of the spacer grid, thus, upon said spacer grid fitting, the filter envelope comprises, at the open end side, an unsupported end portion not supported by the spacer grid.

Advantageously, the sealing member is configured to hold said unsupported end portion folded on at least part of the supported portion of the filter envelope.

For example, according to a preferred, not limiting embodiment, the sealing member comprises a C-shaped clip member having opposite first and second clip portions for clipping said folded unsupported end portion and said part of the supported portion therebetween.

Preferably, the C-shaped clip member is hinged onto the extraction pipe. For example, the extraction pipe rotatably and slidingly engages a through-hole in the first clip portion of the C-shaped clip member, thereby clipping/unclipping operations are achieved by a rotating and sliding movement of the clip member.

According to a different embodiment of the present invention, said sealing member is coupled with the extraction pipe so as to be tiltable between a lifted position, wherein said fitting/unfitting of the spacer grid is allowed, and a lowered position wherein it presses down said folded unsupported end portion on said part of the supported portion of the filter envelope at least by action of its own weight.

The filter group may further comprise a spring member for spring-loading the sealing member, the spring-loaded sealing member being configured to press down said folded unsupported end portion also by action of the spring force.

Another aspect of the solution according to one or more embodiments of the present invention relates to a deep fat fryer comprising the filter group of above.

The filter group of the present invention features a filter envelope/extraction pipe/sealing member arrangement that makes strongly easier the periodical maintenance thereof. In fact, being the extraction pipe fixedly connected to the spacer grid and the filter envelope provided with a dedicated slit for its passage, disconnection/connection of the extraction pipe is not required any longer before/after unfitting/fitting operations of the spacer grid. Moreover, being both the extraction pipe and the sealing member hinged thereto joined to the spacer grid, risks of accidental components loss are considerably reduced.

### Brief Description of the Drawings

Other features and advantages of the solution according to one or more embodiments of the invention will be best understood with reference to the following detailed description, given purely by way of a non-restrictive indication, to be read in conjunction with the accompanying drawings (wherein corresponding elements are denoted with equal or similar references, and their explanation is not repeated for the sake of exposition brevity). In this respect, it is expressly understood that the figures are not necessarily drawn to scale (with some details that may be exaggerated and/or simplified) and that, unless otherwise indicated, they are simply used to conceptually illustrate the described structures and procedures. In particular:
**Figure 1** schematically shows a cross sectional view of a deep fryer according to an embodiment of the present invention;
**Figures 2A-2B** show perspective views illustrating assembly phases of a filter group of the deep fryer according to an embodiment of the present invention, and
**Figures 3A-3B** show perspective views illustrating assembly phases of a filter group of the deep fryer according to another embodiment of the present invention.

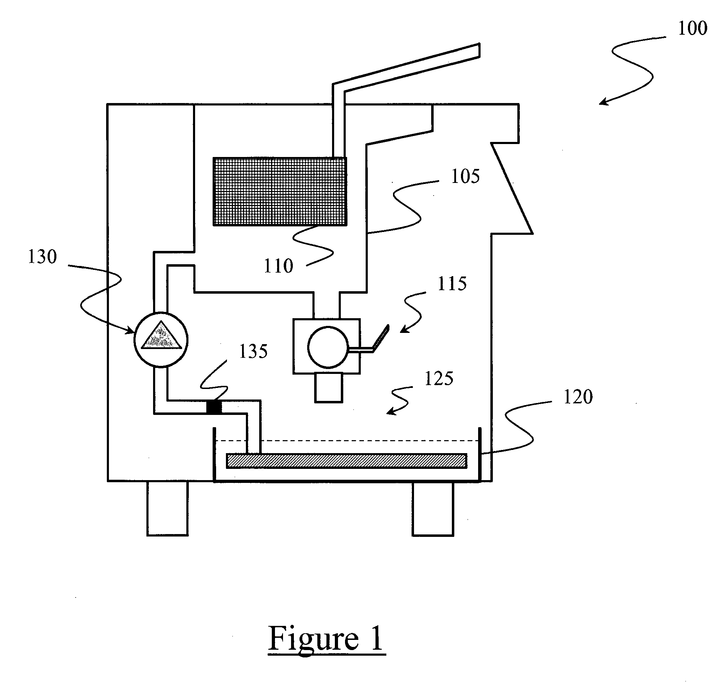

With reference to the drawings, **Figure 1** schematically shows a cross sectional view of a deep fryer **100** (*e.g.*, of the domestic or professional type) according to an embodiment of the present invention.

The deep fryer **100** comprises a fry pot **105** for containing cooking oil (not shown), and a - *e.g.*, wire - basket **110** for containing food to be cooked. As usual, the basket **110** is operable to be lowered into the fry pot **105** thereby allowing food cooking, and raised from it after its end.

As known, during deep frying operations organic materials accumulate in the cooking oil. Overheating of such organic materials may accelerate degradation of the cooking oil, thus impairing its life and quality of the food cooked therein (bad taste, dark color, unhealthy).

For such reasons, the deep fryer **100** is conceived such as to keep the cooking oil clean. In order to achieve that, the deep fryer **100** comprises a drainage valve **115,** provided below (and fluidly connected with) the fry pot **105,** for allowing, upon its opening, a certain (*e.g.*, pre-set) amount of cooking oil to be fed by gravity down to a pan **120** (arranged at the bottom of the deep fryer **100),** a filter group **125,** housed within the pan **120,** for filtering the cooking oil fed thereinto (as better described in the following), and a driven motor pump assembly **130,** connected with the filter group **125** by means of a joint member **135,** for feeding the filtered cooking oil back to the fry pot **105** for further cooking.

In order to ensure proper filtering of the cooking oil, maintenance or replacement of the filter group **125** should be carried out periodically by the user (or by the maintenance man).

In order to achieve that, the filter group **125** is disconnected from the joint member **135** (and hence, from the pump assembly **130),** the pan **120** (together with the filter group **125** housed therein) is extracted from the deep fryer **100** by sliding movement, and the filter group **125** is taken away from the collection pan **120** for its maintenance/replacement, thereafter opposite operations are backwardly carried out for filter group **125** reinstallation.

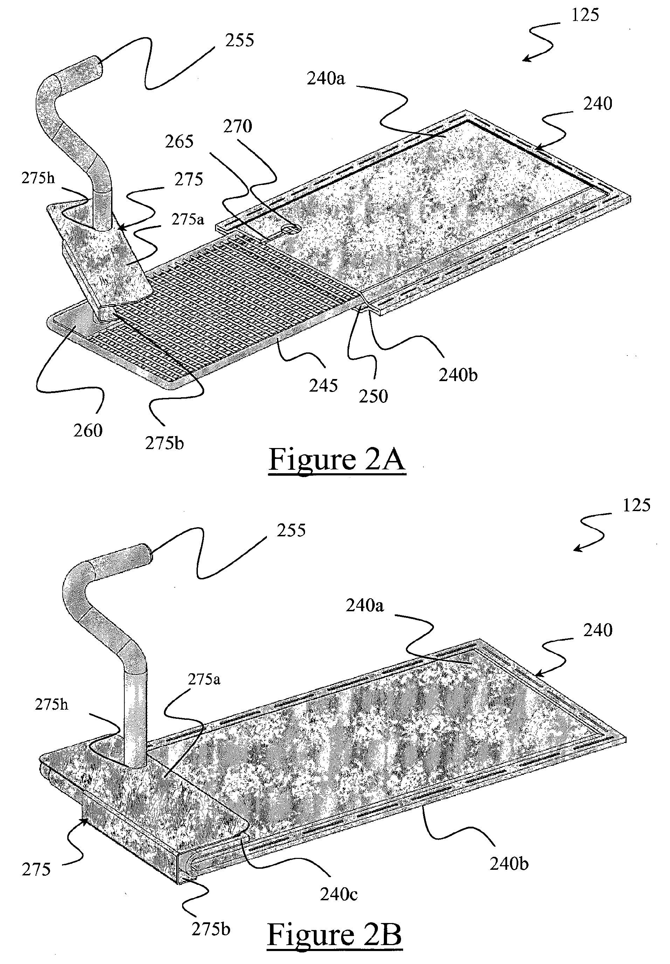

In the following, reference will be made also to **Figures 2A-2B****,** which show perspective views illustrating the filter group **125** (at different assembly phases thereof) according to an embodiment of the present invention.

As best visible in **Figure 2A****,** the filter group **125** comprises a porous material filter envelope **240** for filtering cooking oil passing therethrough, and a spacer grid **245** adapted to be fitted into the filter envelope **240** for preventing it from collapsing.

In the disclosed embodiment, the filter envelope **240** has front **240a** and back **240b** walls joined (*e.g.*, sewed) at three of the four perimeter edges thereof, and is configured to allow longitudinal fitting/unfitting of the spacer grid **245** through the open end **250** defined by the respective unsewed edges. Upon said fitting, the spacer grid **245** supports (at least part of) the filter envelope **240** from inside, thus defining an internal rigid frame for it. In this way, the interstices of the spacer grid **245** identify, within the filter envelope **240,** a free space (hereinafter, pocket, not visible) where filtered cooking oil (*i.e.,* the cooking oil resulting from passage through the front **240a** and back **240b** walls of the filter envelope **240)** is collected.

The filter group **125** further comprises a (*e.g.*, metal) extraction pipe **255** for piping, upon activation of the pump assembly **130,** the filtered cooking oil extracted from the pocket of the filter envelope **240.** In order to achieve that, an upper end of the extraction pipe **255** is adapted to be connected to the joint member **135** (as visible from **Figure 1****).** The opposite, lower end is instead mechanically connected to the spacer grid **245,** and the extraction pipe **255** passes through a hole **270** of the filter envelope **240** (*e.g.*, provided on the front wall **240a** thereof), which hole **270** is advantageously shaped such as to tight enclose the extraction pipe **255** thereby preventing unwanted cooking oil flows therethrough.

In the exemplary disclosed embodiment, in order to ensure mechanical stability, the connection of the extraction pipe **255** to the spacer grid **245** is achieved by means of a connection plate **260.** In the example at issue, the connection plate **260,** preferably square-shaped, is monolithic with the extraction pipe **255,** and identifies a flange of the lower end of the extraction pipe **255** suitable for achieving reliable and firm fixing.

As visible from **Figure 2A****,** the filter envelope **240** comprises a longitudinal slit **265,** extending between the open end **250** and the hole **270,** and configured to allow the transversally-connected extraction pipe **255** to be longitudinally moved/guided therethrough while the spacer grid **245** is being fitted into/unfitted from the filter envelope **240.**

Advantageously, the extraction pipe **255** is connected at a peripheral portion of the spacer grid **245,** and more advantageously - as herein illustrated - at a side peripheral portion (*e.g.*, a corner) thereof. As a consequence, being the hole **270** arranged very close to the open end **250** of the filter envelope **240,** the slit **265** can feature a very short length. Thus, the guiding of the extraction pipe **255** through the slit **265** can be brief and easy.

With respect to the known solutions, where the extraction pipe, arranged substantially centrally the spacer grid, must be disconnected for allowing fitting/unfitting operations, and reconnected after them (which is unpractical and involves excessive time wasting), the present invention allows said fitting/unfitting of the spacer grid **245** to be carried out while the extraction pipe **255** is guided (through the slit **265)** into/from the hole **270.** Thus, being the disconnection of the extraction pipe **255** not required any longer, the extraction pipe **255** (and/or the connection plate **260,** if provided) can be more firmly connected to the spacer grid **245,** for example by welding (incidentally, this improves reliability of the filter group **125,** thereby preventing its breakage after relatively long periods of use, and after a relatively high number of uninstalling/installing cycles).

A sealing member **275** (or more than one sealing member) is provided for sealing the open end **250,** thereby preventing unfiltered cooking oil within the pan **120** from passing through it (thus, bypassing the filtering action by the front **240a** and back **240b** walls of the filter envelope **240**). In the disclosed embodiment, as visible in the **Figure 2B****,** the filter envelope **240** has a length greater than the length of the spacer grid **245,** thereby upon spacer grid **245** fitting, an unsupported end portion **240c** of the filter envelope **240** (*i.e.,* not supported by the spacer grid **245**), is folded up on (part of) the front **240a** wall, and the sealing member **275** operated such as to seal such folded unsupported end portion **240c.** In the example at issue, the filter envelope **240** is long enough to allow the folded unsupported end portion **240c** to completely cover the slit **265,** thereby preventing oil leakage therefrom.

According to the present invention, the sealing member **275** is hinged to the extraction pipe **255** such as to be movable along it and rotatable about it. In the **Figures 2A-2B** embodiment, the sealing member **275** is a C-shaped clip member having opposite upper **275a** and lower **275b** clip portions for clipping/holding the folded unsupported end portion **240c** (and the spacer grid/filter envelope part below it) therebetween.

The upper clip portion **275a** has a through-hole **275h** adapted to hinge the extraction pipe **255** by rotatably/slidingly engaging it therethrough.

Preferably, as visible from the figures, the upper clip portion **275a** is greater than the lower clip portion **275b.** Even more preferably, the upper clip portion **275a** is longer enough to allow arranging the through-hole **275h** so that the extraction pipe **255** passing through it is not intercepted by the lower clip portion **275b,** and wider enough to compress, upon said clipping, the folded unsupported end portion **240c** onto the whole slit **265** (thereby ensuring optimal sealing thereof).

Thus, in (*e.g.*, clipping) operation, after spacer grid **245** fitting and unsupported end portion **240c** folding, the sealing member **275** is axially slid-down along the extraction pipe **255,** thereafter it is rotated so as clip the folded unsupported end portion **240c -** as should be readily understood, opposite operations are backwardly required for unclipping.

With respect to the known solutions, where the sealing member **275** is free/detached from the filter group, the present invention features a filter group **125** already integrating the sealing member **275,** thus avoiding accidental loss thereof. Moreover, clipping/unclipping operations are extremely simple, as requiring only a few rotating and sliding movements.

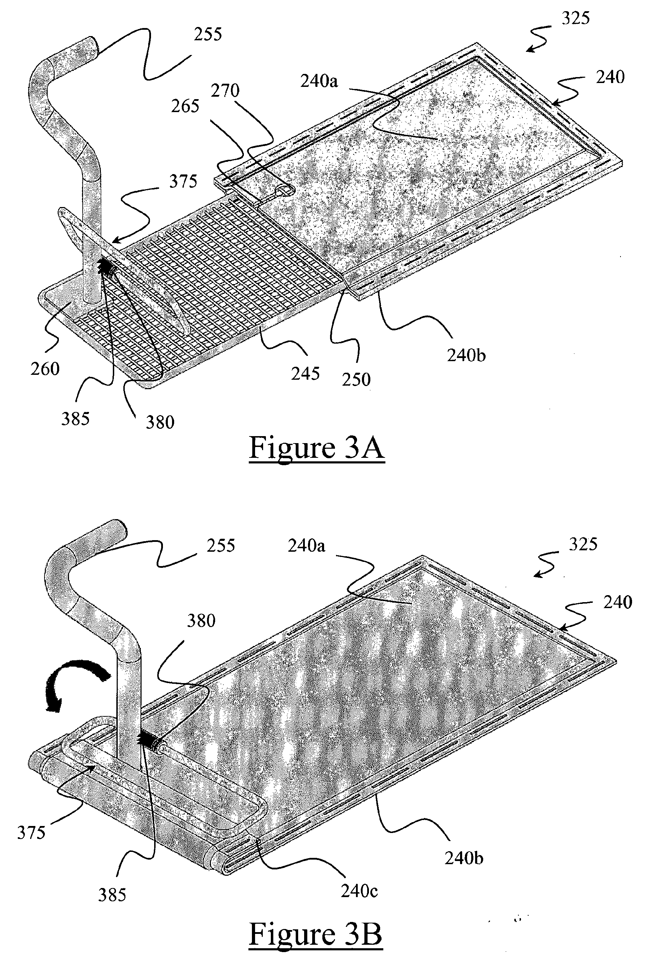

Turning now to **Figures 3A-3B****,** they show perspective views illustrating assembly phases of a filter group **325** of the deep fryer **100** according to another embodiment of the present invention.

The filter group **325** differs from the filter group **125** for the provision of a sealing member **375** that, although conceptually analogous to the previous one, features a different implementation. As visible from the figures, the sealing member **375,** preferably having an elongated-ring shape, comprises a hinging member **380** for hinging thereof to the extraction pipe **255,** so that it can be tilted about a horizontal axis. Upon fitting the spacer grid **245** into the filter envelope **240,** and folding-up the unsupported end portion **240c,** the sealing member **375,** previously tilted-up for allowing said fitting, is released, thereby the gravity force naturally acting on the sealing member **375** allows it to press down (and keep close) the folded unsupported end portion by its own weight. Preferably, as herein exemplary disclosed, such pressing action is assisted by a spring force (conceptually represented by the arrow illustrated in **Figure 3B**) provided by a spring member **385,** which spring-loads the sealing member **375** while the latter is tilted -up.

Naturally, in order to satisfy local and specific requirements, a person skilled in the art may apply to the solution described above many logical and/or physical modifications and alterations within the limitations of the attached claims. More specifically, although the present invention has been described with a certain degree of particularity with reference to preferred embodiments thereof, it should be understood that various omissions, substitutions and changes in the form and details as well as other embodiments are possible within the limitations of the attached claims. In particular, different embodiments of the invention may even be practiced without the specific details (such as the numeric examples) set forth in the preceding description for providing a more thorough understanding thereof; on the contrary, well known features may have been omitted or simplified in order not to obscure the description with unnecessary particulars within the limitations of the attached claims. Moreover, it is expressly intended that specific elements and/or method steps described in connection with any disclosed embodiment of the invention may be incorporated in any other embodiment as a matter of general design choice within the limitations of the attached claims.

## Claims

1. Filter group **(125, 325)** for use in a deep fat fryer **(100),** the filter group comprising:
a porous material filter envelope **(240)** for filtering cooking oil passing therethrough,
a spacer grid **(245)** adapted to be longitudinally fitted into the filter envelope for supporting it from inside, the filter envelope comprising an open end **(250)** for allowing fitting/unfitting of the spacer grid, and
an extraction pipe **(255)** for allowing extraction of filtered cooking oil from inside the filter envelope, said extraction pipe passing through a hole **(270)** of the filter envelope and being transversally connected to the spacer grid,
**characterized in that**
the extraction pipe is transversally connected to a peripheral portion of the spacer grid, and **in that** the filter envelope comprises a longitudinal slit **(265)** extending between said open end and said hole for allowing the transversally-connected extraction pipe to be longitudinally guided therethrough while the spacer grid is being fitted into/unfitted from the filter envelope, whereby said fitting/unfitting of the spacer grid is allowed without disconnection of it from the extraction pipe.

2. The filter group according to Claim 1, wherein the extraction pipe is transversally connected to the spacer grid by welding.

3. The filter group according to Claim 1 or 2, wherein the extraction pipe comprises an enlarged flange **(260)** adapted to be connected to said peripheral portion of the spacer grid.

4. The filter group according to any of the preceding Claims, further comprising a sealing member **(275, 375)** for sealing said open end of the filter envelope, the sealing member being coupled with the extraction pipe such as to be movable with respect to it.

5. The filter group according to Claim 4, wherein the filter envelope has a length greater than the length of the spacer grid, thereby, upon said spacer grid fitting, the filter envelope comprises, at the open end side, an unsupported end portion **(240c)** not supported by the spacer grid, the sealing member being configured to hold said unsupported end portion folded on at least part of the supported portion of the filter envelope.

6. The filter group according to Claim 5, wherein said sealing member comprises a C-shaped clip member **(275)** having opposite first **(275a)** and second **(275b)** clip portions for clipping said folded unsupported end portion and said part of the supported portion therebetween.

7. The filter group according to Claim 6, wherein the C-shaped clip member is hinged onto the extraction pipe.

8. The filter group according to anyone of Claims from 5 to 7, wherein the extraction pipe rotatably and slidingly engages a through-hole **(275h)** in the first clip portion of the C-shaped clip member, thereby clipping/unclipping operations are achieved by a rotating and sliding movement of the clip member.

9. The filter group according to Claim 5, wherein said sealing member **(375)** is coupled with the extraction pipe so as to be tiltable between a lifted position, wherein said fitting/unfitting of the spacer grid is allowed, and a lowered position wherein it presses down said folded unsupported end portion on said part of the supported portion of the filter envelope at least by action of its own weight.

10. The filter group according to Claim 9, further comprising a spring member **(385)** for spring-loading the sealing member, the spring-loaded sealing member being configured to press down said folded unsupported end portion also by action of the spring force.

11. Deep fat fryer comprising the filter group according to any of the preceding Claims.

## Patentansprüche

1. Filtergruppe (125, 325) zur Verwendung bei einer Fritteuse (100), wobei die Filtergruppe aufweist:
eine Filterhülle (240) aus porösem Material zum Filtern von Speiseöl, das durch diese hindurchtritt,
ein Abstandhaltergitter (245), das so ausgelegt ist, dass es longitudinal in die Filterhülle hineinpasst, zum Abstützen derselben von innen, wobei die Filterhülle ein offenes Ende (250) aufweist, um das Einfügen/Entfernen des Abstandhaltergitters zu ermöglichen, und
ein Extraktionsrohr (255) zum Ermöglichen der Extraktion von gefiltertem Speiseöl aus dem Inneren der Filterhülle, wobei das Extraktionsrohr durch ein Loch (270) der Filterhülle hindurchgeht und quer mit dem Abstandhaltergitter verbunden ist,
**dadurch gekennzeichnet, dass**
das Extraktionsrohr quer mit einem Umfangsabschnitt des Abstandhaltergitters verbunden ist und dass die Filterhülle einen Längsschlitz (265) aufweist, der sich zwischen dem offenen Ende und dem Loch erstreckt, um zu ermöglichen, dass das quer verbundene Extraktionsrohr longitudinal durch diesen geführt wird, während das Abstandhaltergitter in die Filterhülle eingefügt/davon entfernt wird, wodurch das Einfügen/Entfernen des Abstandhaltergitters ohne Trennung desselben vom Extraktionsrohr ermöglicht wird.

2. Die Filtergruppe nach Anspruch 1, wobei das Extraktionsrohr quer mit dem Abstandhaltergitter durch Schweißen verbunden ist.

3. Die Filtergruppe nach Anspruch 1 oder 2, wobei das Extraktionsrohr einen vergrößerten Flansch (260) aufweist, der so ausgelegt ist, dass er mit dem Umfangsabschnitt des Abstandhaltergitters verbunden ist.

4. Die Filtergruppe nach einem der vorangehenden Ansprüche, die ferner ein Dichtungselement (275, 375) zum Abdichten des offenen Endes der Filterhülle aufweist, wobei das Dichtungselement mit dem Extraktionsrohr so gekoppelt ist, dass es in Bezug auf dieses beweglich ist.

5. Die Filtergruppe nach Anspruch 4, wobei die Filterhülle eine Länge aufweist, die größer ist als die Länge des Abstandhaltergitters, wodurch bei dem Einfügen des Abstandhaltergitters die Filterhülle an der offenen Endseite einen nicht abgestützten Endabschnitt (240c) aufweist, der nicht durch das Abstandhaltergitter abgestützt ist, wobei das Dichtungselement so ausgelegt ist, dass es den nicht abgestützten Endabschnitt hält, der auf mindestens einen Teil des abgestützten Abschnitts der Filterhülle gefaltet ist.

6. Die Filtergruppe nach Anspruch 5, wobei das Dichtungselement ein C-förmiges Klammerelement (275) aufweist mit entgegengesetzten ersten (275a) und zweiten (275b) Klammerabschnitten zum dazwischen Einklemmen des gefalteten nicht abgestützten Endabschnitts und des Teils des abgestützten Abschnitts.

7. Die Filtergruppe nach Anspruch 6, wobei das C-förmige Klammerelement am Extraktionsrohr gelenkig gelagert ist.

8. Die Filtergruppe nach einem der Ansprüche 5 bis 7, wobei das Extraktionsrohr drehbar und verschiebbar mit einem Durchgangsloch (275h) im ersten Klammerabschnitt des C-förmigen Klammerelements in Eingriff steht, wodurch Einklemm-/Lösevorgänge durch eine Dreh- und Gleitbewegung des Klammerelements erreicht werden.

9. Die Filtergruppe nach Anspruch 5, wobei das Dichtungselement (375) mit dem Extraktionsrohr so gekoppelt ist, dass es schwenkbar ist zwischen einer angehobenen Position, in der das Einfügen/Entfernen des Abstandhaltergitters ermöglicht wird, und einer abgesenkten Position, in der es den gefalteten nicht abgestützten Endabschnitt an dem Teil des abgestützten Abschnitts der Filterhülle zumindest durch eine Wirkung seines Eigengewichts nach unten drückt.

10. Die Filtergruppe nach Anspruch 9, die ferner ein Federelement (385) zum Federspannen des Dichtungselements aufweist, wobei das federgespannte Dichtungselement so ausgelegt ist, dass es den gefalteten nicht abgestützten Endabschnitt auch durch die Wirkung der Federkraft nach unten drückt.

11. Fritteuse, die die Filtergruppe nach einem der vorangehenden Ansprüche aufweist.

## Revendications

1. Groupe de filtre (125, 325) destiné à être utilisé dans une friteuse (100), le groupe de filtre comprenant :
une enveloppe de filtre en matériau poreux (240) pour filtrer l'huile de cuisson passant à travers cette dernière,
une grille d'espacement (245) adaptée pour être montée longitudinalement dans l'enveloppe de filtre pour la supporter depuis l'intérieur, l'enveloppe de filtre comprenant une extrémité ouverte (250) pour permettre le montage / le démontage de la grille d'espacement, et
un tuyau d'extraction (255) pour permettre l'extraction de l'huile de cuisson filtrée de l'intérieur de l'enveloppe de filtre, ledit tuyau d'extraction passant à travers un trou (270) de l'enveloppe de filtre et étant transversalement raccordé à la grille d'espacement,
**caractérisé en ce que**
le tuyau d'extraction est transversalement raccordé à une partie périphérique de la grille d'espacement, et **en ce que** l'enveloppe de filtre comprend une fente longitudinale (265) s'étendant entre ladite extrémité ouverte et ledit trou pour permettre au tuyau d'extraction transversalement raccordé d'être guidé longitudinalement à travers cette dernière, alors que la grille d'espacement est montée dans / démontée de l'enveloppe de filtre, moyennant quoi ledit montage / démontage de la grille d'espacement est autorisé sans la déconnecter du tuyau d'extraction.

2. Groupe de filtre selon la revendication 1, dans lequel le tuyau d'extraction est transversalement raccordé à la grille d'espacement par soudage.

3. Groupe de filtre selon la revendication 1 ou 2, dans lequel le tuyau d'extraction comprend une bride agrandie (260) adaptée pour être raccordée à ladite partie périphérique de la grille d'espacement.

4. Groupe de filtre selon l'une quelconque des revendications précédentes, comprenant en outre un élément d'étanchéité (275, 375) pour sceller ladite extrémité ouverte de l'enveloppe de filtre, l'élément d'étanchéité étant couplé avec le tuyau d'extraction afin d'être mobile par rapport à ce dernier.

5. Groupe de filtre selon la revendication 4, dans lequel l'enveloppe de filtre a une longueur supérieure à la longueur de la grille d'espacement, ainsi après le montage de ladite grille d'espacement, l'enveloppe de filtre comprend, au niveau du côté de l'extrémité ouverte, une partie d'extrémité (240c) non supportée par la grille d'espacement, l'élément d'étanchéité étant configuré pour maintenir ladite partie d'extrémité non supportée pliée sur au moins une partie de la partie supportée de l'enveloppe de filtre.

6. Groupe de filtre selon la revendication 5, dans lequel ledit élément d'étanchéité comprend un élément de collier en forme de C (275) ayant une première (275a) et une seconde (275b) partie de collier opposées pour fixer ladite partie d'extrémité non supportée pliée et ladite partie de la partie supportée entre elles.

7. Groupe de filtre selon la revendication 6, dans lequel l'élément de collier en forme de C est articulé sur le tuyau d'extraction.

8. Groupe de filtre selon l'une quelconque des revendications 5 à 7, dans lequel le tuyau d'extraction met en prise de manière rotative et coulissante un trou débouchant (275h) dans la première partie de collier de l'élément de collier en forme de C, ainsi on obtient des opérations de fixation / de détachement par un mouvement rotatif et coulissant de l'élément de collier.

9. Groupe de filtre selon la revendication 5, dans lequel ledit élément d'étanchéité (375) est couplé avec le tuyau d'extraction afin de pouvoir s'incliner entre une position levée, dans laquelle ledit montage / démontage de la grille d'espacement est autorisé, et une position abaissée dans laquelle il enfonce ladite partie d'extrémité non supportée pliée sur ladite partie de la partie supportée de l'enveloppe de filtre au moins par l'action de son propre poids.

10. Groupe de filtre selon la revendication 9, comprenant en outre un élément de ressort (385) pour charger par ressort l'élément d'étanchéité, l'élément d'étanchéité chargé par ressort étant configuré pour enfoncer ladite partie d'extrémité non supportée pliée également par l'action de la force du ressort.

11. Friteuse comprenant le groupe de filtre selon l'une quelconque des revendications précédentes.
